# EUROPEAN PATENT SPECIFICATION

(11) **EP 0 692 285 B1**
(45) Date of publication and mention of the grant of the patent: **20.09.2000**
(21) Application number: 95903978.5
(22) Date of filing: 27.12.1994
(51) Int. Cl.: A63C 9/00, G01B 5/24, A63C 9/08

(54) **SNOWBOARD BINDING DEVICE**
SNOWBOARDBINDUNGSVORRICHTUNG
DISPOSITIF DE FIXATION DE PLANCHE A NEIGE

(30) Priority: 29.12.1993 JP 35260093
(43) Date of publication of application: 17.01.1996
(73) Proprietor: Soejima, Noboru, Minato-ku, Tokyo 108 (JP)
(72) Inventor: Soejima, Noboru, Minato-ku, Tokyo 108 (JP)
(74) Representative: May, Hans Ulrich, Dr.
(86) International application number: PCT/JP94/02239
(87) International publication number: WO 95/17931

(56) References cited:
- DE-U- 9 014 833
- FR-A- 2 627 097
- JP-A- 3 202 077
- US-A- 3 900 204
- US-A- 5 028 068
- US-A- 5 044 654

## Description

### TECHNICAL FIELD

The present invention relates to a binding device for a snowboard.

### BACKGROUND ART

In order to fix a snowboarder's boots in a suitable position, at a distance from each other, in the center line of the snowboard, the bindings for the boots must each be mounted on the snowboard, at an angle position relative to the center line of the snowboard. For this purpose, it is preferred that they are rotatable around a vertical axis, i.e. an axis which is perpendicular to the general plane of the snowboard, and they must be fixable at a desired angle to said center line.

A binding device for a snowboard with means for securing a boot of a snowboard rider to a rotatable plate comprising a plurality of notches and fixing means attached to the snowboard for adjusting the angular position of a plate relative to the longitudinal direction of the snowboard is described in FR-A-2 627 097.

The rotatable plate described therein is provided with a circular hole having notches at the inner periphery thereof and extending in a plane which is parallel to the plate and the snowboard. The fixing means are attached to the snowboard within the circumference of the circular hole of a plate and extend above said plate outwardly beyond the inner periphery of the hole to hold the rotatable plate in an adjustable angular position relative to the longitudinal direction of the snowboard. To enable such adjustment, the fixing means comprise at least two elements which are provided, at one end thereof, with complementary notches for engaging the notches of the plate, and are positioned within said hole and held slidably in said fixing means to releasably engage the notches of said plate to adjust the angular position of the plate relative to the longitudinal direction of the snowboard.

These fixing means have a relatively complex structure and require elastic means to assure the mutual engagement of the notches of the plate and slidable elements of the fixing means. The required angular adjustment of the plate can only be made when the boot is not held on the plate, and operating the fixing means by hand may be difficult under outdoor conditions of cold and snow. This arrangement does not allow for a quick adjustment of the binding at an exact and easily reproducible angle while the boot is held on the rotatable plate by the binding.

Another binding of this type is described in US-A-5 044 654 and comprises for each binding a rotatable plate (hub) to which the binding is attached and which is provided with a plurality of radial teeth on the underside thereof which cooperate with identical teeth on a base plate which is fixed to the snowboard, so as to lock the rotatable plate and the binding in the desired angle to the center line of the snowboard. To change this angle, the user must loosen a central bolt which holds the rotatable plate on the base plate, make the adjustment and again tighten the central bolt. This arrangement does not allow for a quick adjustment of the binding at an exact and easily reproducible angle, while the boot is held on the rotatable plate by the binding.

Angle positions of bindings on a snowboard, including not only an all-round model, but a free-style or an alpine model, to fix various kinds of soft or hard boots, have conventionally been arranged by a snowboard instructor or a shop assistant, according to an instruction or an experience of such a staff. A snowboard rider with boots is allowed to stand on the snowboard to determine a stance and a fixing angle of the bindings only from the rider's body build a personal peculiarity without any theoretical ground.

In a conventional method of positioning bindings as described above, the boots are fixed at positions which the rider feels suitable. The positions thus arranged seem to result in the most pleasant snowboarding, but such a positioning is only a self-contentment of the snowboarder and makes the snowboarder tired unconsciously and retards an improvement in snowboarding technique.

It is an object of the present invention to provide a binding device for a snowboard whereby an axial deviation of a snowboarder's body is calculated to fit the bindings at adequate positions on a snowboard.

### DISCLOSURE OF THE INVENTION

To achieve these objects, there is provided a binding device for a snowboard with means for securing a boot of a snowboard rider to a rotatable plate comprising a plurality of notches and fixing means attached to the snowboard for adjusting the angular position of the plate relative to the longitudinal direction of the snowboard, which is characterized by the features defined by claim 1 and claim 2.

A method for positioning such binding will now be described briefly. A pair of boots put on by a snowboard rider are fastened to the fore and back loading discs on a bearing frame. While keeping one of the discs immovable, the other disc is turned by twisting an ankle to detect an axial deviation of a free foot. Then, with respect to the other disc, the same procedure is repeated to detect the an axial deviation of the other free foot. An axial deviation ratio is obtainable from this detected data. After a fixing position of a fore boot is settled at a front part of the snow board, the position of a back boot is decided, so as to deviate a fixing position thereof at an angle corresponding to the axial deviation ratio. A more detailed description of the method follows later.

### BRIEF DESCRIPTION OF THE DRAWINGS

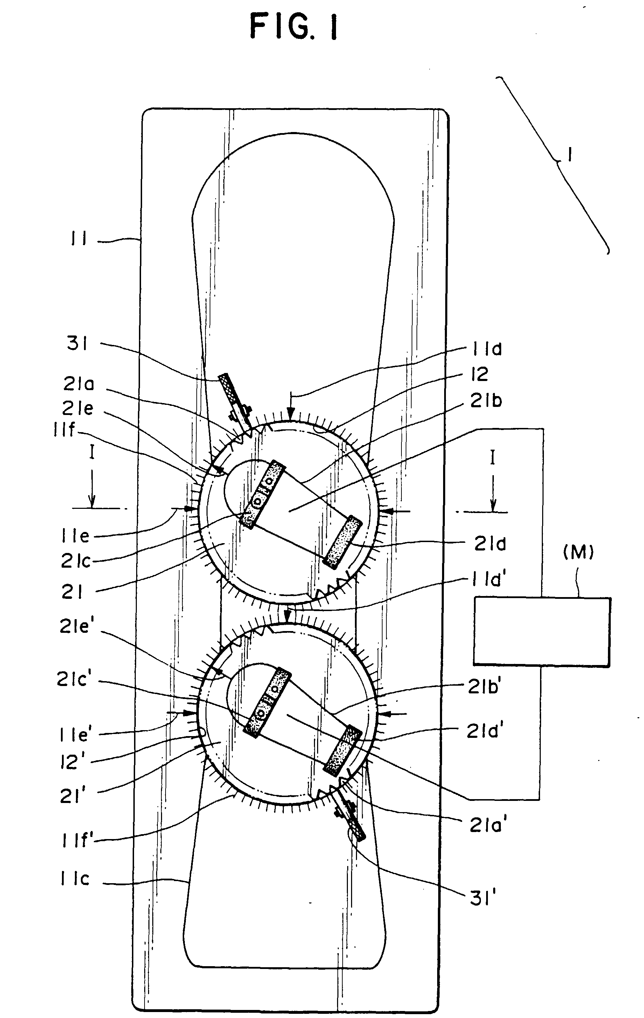

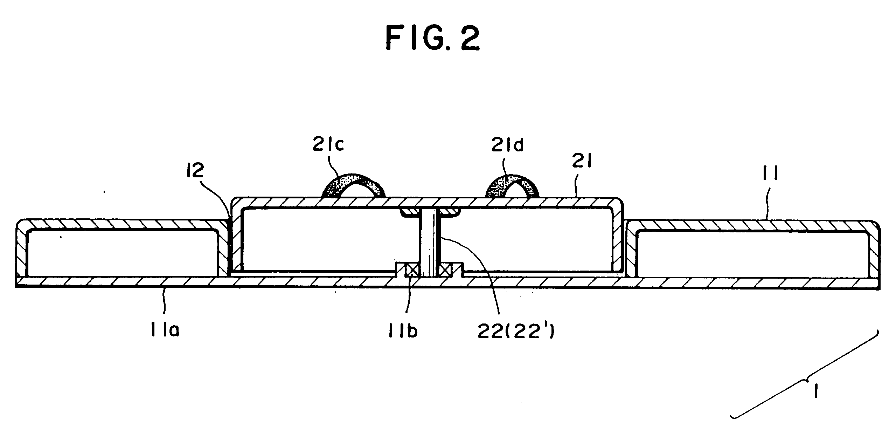

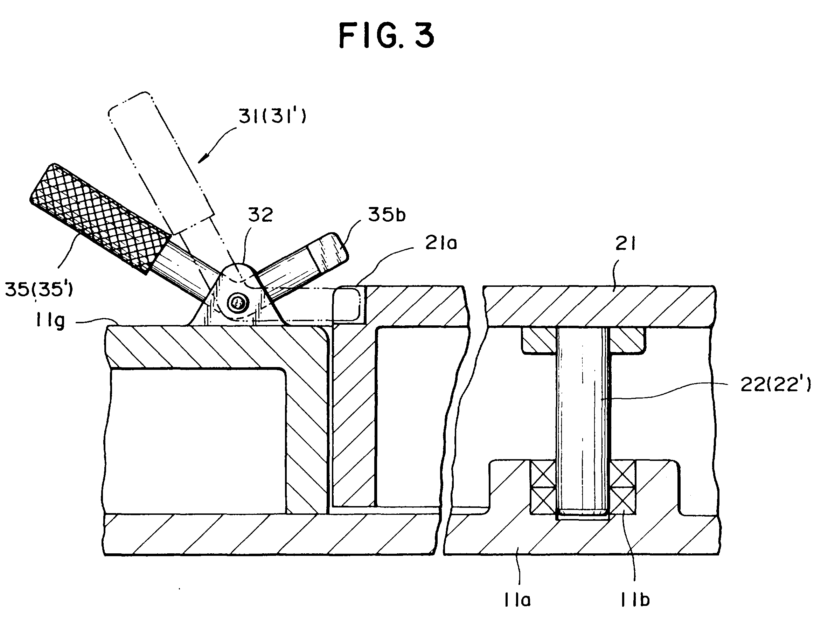

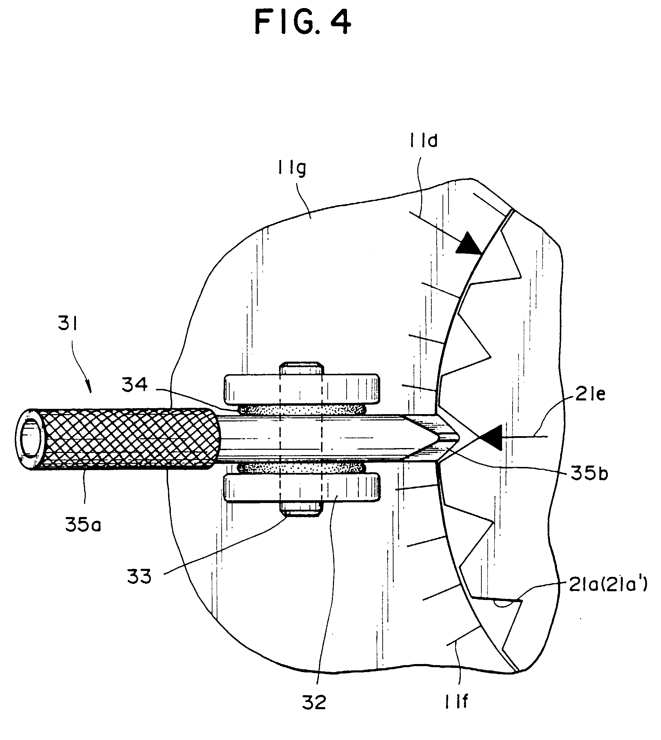

Fig. 1 is a plane view of a device according to the present invention; Fig. 2 is a section taken on line I-I in Fig. 1; Fig. 3 is a fragmentary sectional side view of a main portion of Fig. 1; and Fig. 4 is a plane view of a fixing means.

### MOST PREFFERED EMBODIMENTS OF THE INVENTION

Referring now to a positioning device 1 for bindings to be fitted as shown in the drawings, an embodiment of the present invention will be described in the following.

As shown in Figs. 1 and 2, a positioning device 1 comprises a pair of a fore and back disks 21 and 21' fitted in circular fore and back openings 12 and 12' which are arranged at a central portion of a rectangular base 11 as a plane view thereof. Lower ends of central axes 22 and 22' of the disks 21 and 21' are rotatably supported on a bottom frame 11a of the base 11 by means of bearings 11b, thereby the fore and back disks 21 and 21' being turned arbitrarily on the base 11.

A number of stop notches 21a and 21a' are formed on each periphery of the disks 21 and 21', which are also shown in detail in Fig. 4. Boot marks 21b and 21b' are arranged on the center of the disks 21 and 21', which are provided with boots fastening belts 21c, 21c', 21d and 21d' including a length adjustable type, a "magic fastener" (registered trademark) type, etc.

There are arranged head marks 21e and 21e' at top ends of the boot marks 21b and 21b' so as to indicate deviated directions of the fore and back disks 21 and 21'.

Further, there is arranged a snow board line 11c on a surface of the base 11, which displays an outline of the board and includes the fore and back disks 21 and 21' in the center.

In the center of a longer direction of the line 11c, center marks 11d and 11d' are arranged, from which 40 graduations 11f are given on each inner periphery of both circular openings 12 and 12' at an angular interval of 9° .

Fixing means 31 and 31' are arranged on the base 11 to restrict turning of the fore and back disks 21 and 21' as shown in Figs. 3 and 4 as enlarged views.

The fixing means 31 and 31'have common structure in which a L-shaped fixing body 35 or 35' is fitted pivotally on a hinge shaft 33 through elastic rings 34 thereby only forcedly pivoting the body 35 or 35', the elastic rings 34 being caught between bearing frames 32 mounted on a top frame 11g of the base 11. By pushing up and down a handle 35a, a tapered catch 35b formed on an other end thereof is caught by and released from stop notches 21a and 21a' of the fore and back disks 21 and 21', respectively.

A positioning method of bindings by use of the present positioning device 1 will be described in the following.

As to a mode how a rider stands on a snow board, many stances are popular and known such as a sideway stance in which a rider stands sideways on the board, a regular stance, a goofy stance and the like. However, for the sake of convenience, the present positioning method will be applied to the sideway stance.

### 1. A procedure to decide a rider's front direction

In order to prevent the player from turning over, the fixing bodies 35 and 35' of the fixing means 31 and 31' are moved in advance from a full lined position to a virtual broken lined position in Fig. 3 so as to restrict turning of the fore and back disks 21 and 21'.

In this situation, the snow board rider with a pair of boots put on is allowed to stand on the boot marks 21b and 21b' of the fore and back loading disks 21 and 21' and fasten the boots thereon by means of fastening belts 21c, 21c', 21d and 21d' as a preparatory step.

The catch 35b is once released from the stop notch 21a by operating the fixing body 35 of the fixing means 31 to allow the fore disk 21 free (releasing operation). Then, while coinciding the head mark 21e in position with the center mark 11d, the catch 35b is again caught by the stop notch 21a to restrict the fore disk 21 by operating the fixing body 35 of the fixing means 31 (fixing operation).

With respect to the back disk 21', the head mark 21e' is deviated from the center mark 11d to a counter-clockwise direction at about 30° to fix the the disk 21' by pushing on and off the fixing means 31'.

In this situation, the rider's body is twisted around a backbone thereof to a clockwise direction as far as possible without bending knees, thereby detecting the front direction of the body.

The body is then returned back to the initial position, while the boots are taken off from the fore and back loading disks 21 and 21' to change direction of the body so as to turn toward the opposite side of the center mark 11d. The boots as well as the fore and back loading disks 21 and 21' are fixed by the similar operation as described above to twist the body to a counter-clockwise direction, this time, thereby detecting the front direction of the body.

It is possible to detect a turning around angle of the player to the right-left direction from the front position based on the center mark 11d by simply detecting, for example, a direction of the rider's eyes. Accordingly, a difference in such angles can be easily obtained.

As a result of these operations, it is confirmed that a side where the body is twisted much further from the front, or a more easily twisted direction of the body is a more suitable direction to which the player's body should be turned from the front position of the snow board. Thus, the front of the player's body to a dashing direction of the snow board can be easily decided.

### 2. A procedure to decide a fitting angle of bindings

According to the procedure described above, there will be described below a case where the rider's body desirably turns leftward to a dashing direction of the snow board as shown in Fig. 1.

First of all, according to the fixing operation described above, the fore and back disks 21 and 21' are fixed at positions where side marks 11e and 11e' coincide in positions with the head marks 21e and 21e', respectively, by operating the fixing means 31 and 31'.

Then, according to the releasing operation described above, only the fore disk 21 is released from a fixed condition to allow a right ankle to twist right and left, thereby detecting an axial deviation of the body determined by a reading of the graduations 11f as width of a turning angle of the right leg to the side mark 11e. The snow board rider to be tested should keep both knees straight without bending. Here, it is assumed that the deviation is about 18° to the right-left direction for the purpose of convenience.

According to the fixing operation described above, the fore disk 21 is fixed at a position where the side mark 11e is coincident with the head mark 21e, while only the back disk 21' is released by the releasing operation to detect an axial deviation of the body relating to a left leg in a similar manner as described above. Here again, it is assumed that the deviation thus obtained is about 9 ° .

Then, the angular deviations are about 18° and about 9° , a ratio thereof being easily calculated as 18:9, or 2:1.

In the next step, the fore disk 21 is released by the similar releasing operation and then fixed again by the similar fixing operation at an angular position of the rider's preference, for example, at a position of 36° to the center mark 11d.

Further, the back disk 21' is similarly released by the releasing operation to decide an angular position thereof. The turning direction of the back loading disk 21' is equal to half the angle of the fore disk 21, i.e., about 18° , because the ratio is 2:1 as described above.

In this situation, the back disk 21' is fixed similarly by the fixing operation, and thus the turning angles of both disks are consistent with the fitting angles of the bindings.

Accordingly, fitting positions of the bindings of this player are 36° and 18° to the center mark 11d for the right and left boots, respectively. As described above, the bindings can be fitted at adequate positions suitable for each rider's body.

Although it is empirically known that the distance between both bindings is about 40 cm and nearly equals to standard rider's breadth of shoulders, such a distance may apparently be changed if desired.

Further, it is possible to detect and monitor the turning angles of the fore and back disks 21 and 21' by means of a potentiometer (not shown) and a monitor (M) as shown virtually by a broken line in Fig. 1, respectively. A similar result can be obtained by detecting the axial deviation of the body to decide the angular positions of the fore and back disks 21 and 21' to the center marks.

While an embodiment of the present invention has been described with respect to the sideway stance, it should be understood that a theoretical procedure to detect the axial deviation of the body thereby deciding the position of the boots exactly is common to the regular stance, etc.

### INDUSTRIAL APPLICABILITIES

Characteristic effects of the present invention are as follows:
1. The bindings can be fitted adequately at positions on the snow board depending on the axial deviation of the rider's body, thereby improving a snow boarding technique without getting severely hurt.
2. Because of simple structure in which the rotatable fore and back disks are arranged on the base provided with displaying marks, the present positioning device is very compact and easy to transport without any trouble.

## Claims

1. A binding device for a snowboard with means for securing a boot of a snowboard rider to a rotatable plate comprising a plurality of notches, and fixing means attached to the snowboard for adjusting the angular position of the plate relative to the longitudinal direction of the snowboard, characterized in that the plate is a disc (21, 21') including the plurality of notches (21a, 21'a) at the circumference thereof, and the fixing means (31, 31') include a frame (32) attached to the snowboard, an L-shaped fixing body (35, 35') pivotally fixed to the frame by a hinge shaft (33), the L-shaped fixing body having a tapered catch (35b) at one end thereof receivable in any one of the plurality of the notches (21a, 21'a), wherein the angular position of the plate can be adjusted by pivoting the L-shaped body to disengage from one of the plurality of notches, rotating the loading disc (21, 21'), and pivoting the L-shaped body (35, 35') to engage another of the plurality of notches.

2. A binding device according to claim 1, comprising on the snowboard a pair of circular discs (21, 21') with boot-fastening means (21c, 21d; 21c', 21d'), said disks being rotatably supported on said board, each disk bearing a headmark (21e, 21e') to indicate the direction of the disk relative to a centre mark (11d, 11d') and circumferential graduation on the snowboard, the fixing means (31, 31') being arranged on the snowboard to releasably restrict turning of the fore and back disks (21, 21').

## Patentansprüche

1. Snowboard-Bindungsvorrichtung mit Mitteln zur Befestigung eines Schuhs eines Snowboard-Fahrers auf einer drehbaren Platte mit einer Mehrzahl von Kerben und am Snowboard befestigten Fixiermitteln zur Einstellung der Winkelposition der Platte bezüglich der Längsrichtung des Snowboards, **dadurch gekennzeichnet, daß** die Platte eine Scheibe (21, 21') mit der Mehrzahl von Kerben (21a, 21'a) an ihrem Umfang ist und die Fixiermittel (31, 31') einen am Snowboard befestigten Rahmen (32), sowie einen durch eine Gelenkachse (33) am Rahmen schwenkbar gehaltenen L-förmigen Fixierkörper (35, 35') umfassen, wobei der L-förmige Fixierkörper an einem seiner Enden eine verjüngte Klinke (35b) hat, die in irgendeine der Mehrzahl von Kerben (21a, 21'a) aufnehmbar ist, wobei die Winkelposition der Platte eingestellt werden kann, indem man den L-förmigen Körper schwenkt, um ihn aus einer der Mehrzahl von Kerben zu befreien, die Aufstellscheibe (21, 21') dreht, und den L-förmigen Körper (35, 35') schwenkt, um in eine andere der Mehrzahl von Kerben einzugreifen.

2. Bindungsvorrichtung nach Anspruch 1, die auf dem Snowboard ein Paar von kreisförmigen Scheiben (21, 21') mit Schuh-Befestigungsmitteln (21c, 21d; 21c', 21d') aufweist, wobei die Scheiben auf dem Snowboard drehbar gehalten sind, jede Scheibe eine Kopf-Markierung (21e, 21e') aufweist, um die Richtung der Scheibe bezüglich einer Mittelmarkierung (11d, 11d') anzugeben, und auf dem Snowboard Umfangsgraduierung aufweist, wobei die Fixiermittel (31, 31') auf dem Snowboard angeordnet sind, um das Drehen der vorderen und hinteren Scheiben (21, 21') lösbar zu begrenzen.

## Revendications

1. Dispositif de fixation concernant un surf des neiges doté de moyens de blocage de la bottine du surfeur sur une plaque tournante munie d'une multitude d'encoches et un dispositif de verrouillage fixé au surf des neiges pour ajuster la position angulaire de la plaque par rapport au sens longitudinal du surf des neiges, caractérisé par le fait que la plaque est un disque (21, 21') comportant la multitude d'encoches (21a, 21a') à la circonférence du dispositif, et les dispositifs de verrouillage (31, 31') comportent un châssis (32) fixé au surf des neiges, un corps de verrouillage en forme de L (35, 35') fixé en pivot au châssis par un arbre d'articulation (33), le corps de verrouillage en forme de L étant doté d'un dispositif d'arrêt conique (35b) à une extrémité du dispositif pouvant s'emboîter dans chacune des encoches (21a, 21a'), la position angulaire de la plaque pouvant être ajustée en faisant pivoter le corps en forme de L pour se désengager de l'une des encoches, en faisant tourner le disque de chargement (21, 21') et en faisant pivoter le corps en forme de L (35, 35') pour s'introduire dans une autre des encoches.

2. Dispositif de fixation selon la revendication 1, comprenant, sur le surf des neiges, une paire de disques circulaires (21, 21') munis d'attaches pour bottines (21c, 21d, 21c', 21d'), lesdits disques étant rotativement supportés sur la planche, chaque disque comportant un repère frontal (21 e, 21 e' ) pour indiquer le sens du disque par rapport au repère central (11d, 11d') et une graduation circonférentielle sur le surf des neiges, les dispositifs de verrouillage (31, 31') étant disposés sur le surf des neiges pour limiter, sous forme de verrouillage reversible, la rotation des disques avant et arrière (21, 21').
